# EUROPEAN PATENT SPECIFICATION

(11) **EP 1 031 907 B1**
(45) Date of publication and mention of the grant of the patent: **04.05.2005**
(21) Application number: 00103921.3
(22) Date of filing: 24.02.2000
(51) Int. Cl.: G06F 1/00

(54) **Executable program selecting system**
Auswahlsystem für ausführbare Programme
Système de sélection de programmes exécutables

(30) Priority: 26.02.1999 JP 9530199
(43) Date of publication of application: 30.08.2000
(73) Proprietor: HUDSON SOFT CO., LTD., Sapporo-city, Hokkaido (JP)
(72) Inventor: Kaneko, Kiyoshi, Room 206 Verde Minami-Nagasaki, Tokyo 171-0052 (JP)
(74) Representative: Goddar, Heinz J., Dr.

(56) References cited:
- EP-A- 0 809 244
- WO-A-97/08632
- US-A- 4 819 267
- US-A- 5 809 230

## Description

### Background of the Invention

### Field of the Invention

This invention relates to an executable program selecting system capable of obtaining a finite period of time for execution of programs or processing of data based on input information such as a password or the like.

### Description of the Background Art

With the rapid expansion of information communication network such as personal computer communications or internet, there has been more and more programs such as game software, communication software, editor software, etc. that are created by network users themselves and distributed over the network.

These programs are distributed in a form where network users may, upon downloading, use such programs free of charge (what is called freeware), or where network users pay the program creator in due consideration and then continue using those programs after the lapse of a specified trial period (what is called shareware). In the case of shareware, in particular, it is increasingly becoming a popular practice that the whole program becomes usable only upon inputting a password issued directly by the program creator or indirectly by his or her agent on their confirmation of the money paid in.

For most shareware, it is common that once a collating password is input to start up a program, the program becomes usable on a continued basis, unless or until the personal computer used has its models changed or its OS changed, etc.

On the other hand, it has been known that in order to guard against unauthorized duplication, etc., a provision is made of software protecting technique by which the main program is selected, executed and rendered operable only when a necessary password is input. Also known conventionally has been a technique used in some type of game software, wherein a password composed of desired characters is input to select and execute one out of a plurality of programs.

According to the conventional techniques for the selection and execution of a computer program by password, no time limitation has been set for the inputting of the password, and because of this, once a valid password is input, it becomes possible to use the program semi-permanently. For certain types of software, however, it would be the case that its creator might prefer intentionally setting a finite period of time on the use of a specific program, or requiring the users to select and execute programs or process data that differ or vary depending on the time of their password input.

### Summary of the Invention

US-A-5 809 230 discloses a system according to the preamble of claim 1.

WO 97 08632 A, as well, shows a system according to the preamble of claim 1.

Accordingly, one object of this invention is to provide an executable program selecting system whereby a finite period of time is obtained for the execution of programs or processing of data based on input information like a password, etc. Also, another object of this invention is to provide an executable program selecting system that can select and execute programs or process data that differ or vary depending on the time of the input information.

This object is achieved by a system according to claim 1.

For the storage means, it is possible to use a storage medium such as cartridge, floppy disk, magneto optical disc or the like that can be attached to or removed from electronic equipment. The storage means may alternatively be an external storage means like an external memory server that is connected through a communication means.

For the external input means, an input means through which input information like information of handwritten input characters or symbols, or information of electric or optical signals is took in externally.

On the other hand, it is desirable that the timing means times duration like years, months, days, hours, minutes, or seconds (hereinafter referred to "time data"). The time data may be at least one of these examples, however, it is needless to say that the time data may be given in an arbitrary combination of years and months, days and hours, hours and minutes, or minutes and seconds, etc.

For the calculation means, it is possible to put in practical use a synthesizing means which synthetically combines information from the input means and that from the timing means. Here, as one example of the synthesizing process, synthesis on the basis of calculation by random numbers or mathematical logic can be effected.

Also, information from the timing means can be time data itself, but it may well be the information converted from the time data through calculation by random numbers or mathematical logic.

The data or programs selectively processed or executed in this invention is not limited to use within the unitary electronic system such as a computer, a game unit or the like storing the data or programs. The data or programs selectively processed or executed may be transferred to other electronic equipment, for instance, a second storage means provided in a portable game unit.

The processing means or the execution means may be a means selectively processing or executing the data or programs stored in the storage means, based on information from the timing means, even in the absence of the information from the input means.

The system of this invention is applicable to not only computers but also a large variety of other electronic equipment that stores and executes programs such as communication equipment, home video game units, portable game units cooperating with home video game units or the like.

### Brief Description of the Drawings

The invention will be explained in more detail in conjunction with appended drawings, wherein:
Fig. 1 is a block diagram showing an executable program selecting system in a first preferred embodiment according to this invention; and
Fig. 2 is a block diagram showing a second preferred embodiment according to this invention.

### Detailed Description of the Preferred Embodiments

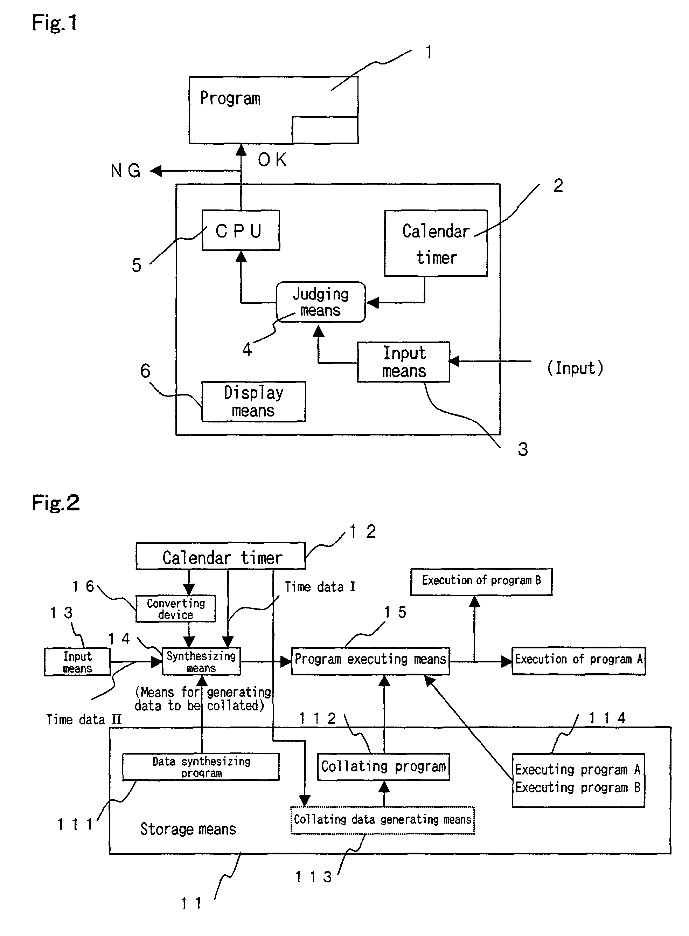

Fig. 1 shows the executable program selecting system in the first preferred embodiment according to this invention. The system is provided with a storage means 1 with specified programs stored in; a calendar timer 2 that generates timing data comprising the date, the time of day, or their combinations; an input means 3 for inputting external data such as the date, the time of day, or their combinations, passwords or the like; a judging means 4 that collates the timing data generated by the calendar timer 2 with the external data input by the input means 3 and then outputs results of the calculation; and CPU 5 that, responding to the results of the calculation, outputs control command for controlling the execution of the program stored in storage means 1. Further, a reference numeral 6 denotes a display unit of the system.

In this first preferred embodiment of the invention, CPU 5 receives the results of calculation performed by judging means 4 and, on the basis of the results, outputs a control command (OK) to execute the program designated from among a plurality of programs stored in storage means 1 or other control commands (NG) to quit the system or the like.

Next, the operation of the first preferred embodiment of the invention will be explained below.

When the external data (the date, the time of day, or their combination, passwords, etc.) input through the input means 3 is input into the judging means 4, the judging means 4 collates the external data with the timing data generated by the calender timer 2, then outputs the results (for example, it generates positive result if the collating finds agreement between the data, and negative result if the collating finds disagreement) to CPU 5. And then CPU 5 outputs a control command (OK) to execute the program when the collating finds agreement between the data, and if the collating finds disagreement between the data, CPU 5 outputs other control commands (NG) to quit the system or the like. Thus, the program can be selectively executed only when an external data such as a password or the like, in response to the input thereof, agree with the timing data.

Here the external data may be input directly in a time data format capable of direct collating with timing data (normally composed of the date, the time of day, or their combination), or may also be converted into a time data format by the input means 3 or the judging means 4, after the external data is input in a password or any other data format and before the external data is collated with the timing data.

Further, the judging means 4 may be designed such that it first collates the external data with other data associated with a certain period (hereinafter called a designated period) which is separately designated by the calendar timer 2, and then judges whether they agree or otherwise.

In the first preferred embodiment of the invention, the program to be stored in storage means 1 and executed selectively may not necessarily be limited to one in its number, but may be such that a plurality of programs are stored and either one or more of them are executed selectively. In the latter case, by associating a plurality of different designated periods with a plurality of different programs, respectively, it is possible to selectively execute one or more specified programs that are associated with a designated period only when the external data and the specified designated period agree with one another. Thus, for instance in a home video game unit, a function can be realized wherein application program A is run when a password, etc. is input during a designated period and another application program B is run when a password, etc. is input during another designated period after the former designated period.

Furthermore, for another method for designating a designated period by calendar timer 2, it is also possible to utilize the results of judgement by the judging means 4. That is, depending on the results of judgement by the judging means 4, a configuration may be applicable wherein the designated period to be referred to in response to the next input of the external data is set differently. Needless to say, in this case also, by associating a plurality of different designated periods with a plurality of different programs, it is possible to selectively execute one or more specified programs that are associated with a designated period only when the external data and the specified designated period agree with one another.

At the same time, as an additional function of CPU 5, it may be set wherein the specified program is selectively executed, in response to the results of the collation between the external data output from the judging means 4 and the timing data, and a part or the whole of the parameters (hereinafter called "specified parameter") that acts on the specified program is selectively run. Thus, an advanced selectable execution of programs using specified parameters can be achieved.

Next, a system of the second preferred embodiment according to this invention will be explained below, with reference to Fig. 2.

In the second preferred embodiment, the executable program selecting system shown in Fig. 2 is provided with a storage means 11; a calendar timer 12; an input means 13 that receives external data and outputs time data; a synthesizing means 14 that synthesizes information from the calendar timer 12 with the time data from the input means 13; a program execution means (CPU) 15 that selectively executes programs in response to outputs from the synthesizing means; and a converting device 16 that converts timing data generated by the calendar timer 12 into converted information through calculation by specified random numbers or mathematical logic. In addition, stored in the storage means 11 are: a data synthesizing program 111 for having the synthesizing means 14 execute the specified synthesizing processing on the basis of the outputs from the calendar timer 12 (time data I) and/or on the basis of the outputs from the converting device 16 and the outputs from the input means 13 (time data II); a collation program 112 that is executed on the basis of collating data generated by a collating data generating means 113 in response to the outputs from the calendar timer 12; and executing programs 114 comprising executing programs A and B.

Then, the operation of the system in the second preferred embodiment of this invention will be explained below.

When external data such as a password or the like is input in the input means 13, the input means 13 outputs specified time data 2 to synthesizing means 14. On the other hand, an output from the calendar timer 12 (time data 1) is output directly to synthesizing means 14, and at the same time output to synthesizing means 14 after the time data is converted through the converting device 16 by calculation using random numbers or mathematical logic. The synthesizing means 14, based on the time data I and/or on the information derived from the conversion at converting device 16 and the time data II, carries out specified data synthesis by the data synthesizing program 111 stored in the storage means 11. The data generated by the synthesizing means are hereinafter referred to as "data to be collated".

Next, other output from the calendar timer 12 is input to the collating data generating means 113, where collating data are generated associated with the time data of the calendar timer 12. The collating program 112 stored in the storage means 11 is run on the basis of the collating data.

The program execution means 15 collates the output from synthesizing means 14 (data to be collated) with the output from the synthesizing data generating means 113 (collating data), then executes selectively executing programs A or B stored in the storage means 11 in accordance with the collation results.

In this second preferred embodiment of the invention, the data to be collated is information associated with the time data I which is the output from the calendar timer 12 and/or the time data II which is the output from the input means 13. Accordingly, by constituting appropriately the data synthesizing program 111 and/or the collating program 112 stored in storage means 11, it is possible to execute selectively and exclusively the desired executing program from among executing programs 114 with a finite period in response to the external input.

Particularly, when converting the time data of the calendar timer 12 through converting device 16, the time data can be converted at random based on calculation by specified random numbers and mathematical logic. Therefore, a random selection/execution of programs can be achieved because the data to be collated is generated at random in the synthesizing means 14 even if a plurality of selected executing programs associated with each other in time series are set at the time of programming. Thus, unpredictableness of selection/execution of executing programs can be amplified and the game software for such as home video games, computer games, and portable games can be more entertaining.

In the second preferred embodiment of this invention, the executing program to be selected was explained to be either executing program A or B, but the system can be set so that it performs to select both. Moreover, in place of executing programs, data that are referred to by the programs being performed can be set to be selected. In addition, the generation of collating data by the collating data generating means 113 is not an absolute necessity. The collating program can be set so that it directly uses the information from the calendar timer.

The system in the second preferred embodiment of this invention is specifically suited to use wherein a portable game unit is connected to a home video game unit and in which data or programs stored in a first storage means (a storage medium) that is mounted on or attached to the home video game unit are then selected and transferred to a second storage means of a portable game unit. More specifically, the storage means 11 may be the first storage means such as a memory device housed in a cartridge capable of being attached to or being removed from a home video game unit, a CD-ROM mounted on said game unit or the like. The program executing means 15 can transfer the programs to be selected and executed to the second storage means of the portable game unit (not shown), by way of a transfer means (also not shown). Additionally, the data or programs which have been transferred to the portable game unit can have their available time or available period limited if desired. In this case, as for the means for transferring to be taken, signal forms can be either of electric signals, light signals, radio signals, etc., and the transfer media to be used may be of any type.

In both first and second preferred embodiments of this invention, the judging means 4 and the synthesizing means 14 are designed so that they may judge or synthesize in response to outputs from the input means 3 and 13, respectively, however, even in the absence of inputs through the input means, the judging means 4 and the synthesizing means 14 can be set so as to selectively execute programs based only on information from the calendar timers 2 and 12, respectively.

As explained above, according to the executable program selecting system of this invention, the system comprises a storage means for storing at least one program; a timing means for generating specified time-related information; an external input means; a calculation means for performing specified calculation based on the information obtained from both the timing means and the input means; and an execution means for executing the program stored in the storage means on the basis of the output from the calculation means. In addition, the system for processing data comprises a storage means for storing at least one item of data; a timing means for generating specified time-related information; an external input means; a calculation means for performing specified calculation based on the information obtained from both the timing means and the input means; and a processing means for processing the data stored in the storage means on the basis of the output from the calculation means. Thus, it is possible for the system to obtain finite periods in the execution or processing of programs or data on the basis of other input information like a password. Moreover, since the system is capable of selecting and executing programs or processing data that differ with the timing of password input, it can be suitably applied to home video game units, computer game units or portable game units and can have game software more entertaining. Hence this invention has enormous value in industrial application.

## Claims

1. System for time-selectively executing programs or processing data, comprising: a storage means (1, 11) for storing at least one program or item of data; a timing means for generating specified time-related information; an input means (3, 13) connected to a calculation means; said calculation means for performing specified calculation based on the information obtained either from both said timing means and said input means (3, 13) or from only said timing means in case of absence of information from said input means (3, 13); and an execution or processing means for executing said program/processing said data stored in said storage means (1, 11) on the basis of the output from said calculation means only during a designated time period, **characterized in that** said execution or processing means includes a process through which specified data to be collated associated with the information from said timing means is collated with the information from said calculation means and said execution or processing means selectively executes the program/processes the data stored in said storage means based on the result of the collating process.

2. System as in claim 1, wherein said storage means (1, 11) is a storage medium such as cartridge, floppy disk, magneto optical disc or the like that can be attached to or removed from electronic equipment.

3. System as in claim 1, wherein said storage means (1,11) is an external storage means like an external memory server that is connected through a communication means.

4. System as in claim 1, wherein said input means (3, 13) is an input means through which input information like information of handwritten input characters or symbols, information of electric or optical signals can be inputted.

5. System as in claim 1, wherein said timing means times duration like years, months, days, hours, minutes, or seconds as time data.

6. System as in claim 1, wherein said calculation means is a synthesizing means (14) which synthetically combines the information from said input means (13) and the information from said timing means.

7. System as in claim 6, wherein said synthesizing means (14) effects synthesis through calculation by random numbers or mathematical logic.

8. System as in claim 5, wherein the information from said timing means is the information converted from said time data through calculation by random numbers or mathematical logic.

9. System as in claim 1, further comprising a transfer means for transferring the program or data which has been selectively executed or processed by said execution or processing means to a second storage means.

10. System as in claims 1 and 5, wherein said data to be collated is generated based on said time data from said timing means and is in a data format capable of comparison with the information from said timing means.

## Patentansprüche

1. System zur zeitselektiven Ausführung von Programmen oder Verarbeitung von Daten, umfassend: ein Speichermittel (1, 11) zur Speicherung von mindestens einem Programm oder Datenelement; ein Zeitsteuermittel zur Erzeugung von spezifizierter zeitbezogener Information; ein Eingabemittel (3, 13), das mit einem Rechenmittel verbunden ist; wobei genanntes Rechenmittel zur Durchführung von spezifizierten Berechnungen basierend auf der entweder von sowohl genanntem Zeitsteuermittel als auch vorgenanntem Eingabemittel (3, 13) oder von nur genanntem Zeitsteuermittel im Falle des Fehlens von Information von genanntem Eingabemittel (3, 13) erhaltenen Informationen dient; und ein Ausführ- oder Verarbeitungsmittel zur Ausführung von genanntem Programm/Verarbeitung von genannten Daten, das/die in genanntem Speichermittel (1, 11) gespeichert ist/sind, auf der Grundlage der Ausgabe von genanntem Rechenmittel nur während einer festgelegten Zeitdauer, **dadurch gekennzeichnet, daß** genanntes Ausführoder Verarbeitungsmittel einen Prozeß enthält, durch den spezifizierte zu vergleichende Daten, die mit der Information von genanntem Zeitsteuermittel verbunden sind, mit der Information von genanntem Rechenmittel verglichen werden, und genanntes Ausführoder Verarbeitungsmittel auf der Grundlage des Ergebnisses des Vergleichsprozesses das Programm wahlweise ausführt/die Daten wahlweise verarbeitet, das/die in genanntem Speichermittel gespeichert ist/sind.

2. System nach Anspruch 1, **dadurch gekennzeichnet, daß** genanntes Speichermittel (1, 11) ein Speichermedium, wie zum Beispiel Kassette, Magnetdiskette, magnetooptische Platte oder dergleichen ist, das eingelegt oder aus dem elektronischen Gerät herausgenommen werden kann.

3. System nach Anspruch 1, **dadurch gekennzeichnet, daß** genanntes Speichermittel (1, 11) ein externes Speichermittel, wie zum Beispiel ein externer Speicher-Server ist, der über eine Übertragungseinrichtung verbunden ist.

4. System nach Anspruch 1, **dadurch gekennzeichnet, daß** genanntes Eingabemittel (3, 13) ein Eingabemittel ist, durch das Eingabeinformation, wie zum Beispiel Information aus den schriftlichen Eingabezeichen oder -symbolen, Information aus elektrischen oder optischen Signalen, eingegeben werden kann.

5. System nach Anspruch 1, **dadurch gekennzeichnet, daß** genanntes Zeitsteuermittel Dauer wie Jahre, Monate, Tage, Stunden, Minuten oder Sekunden als Zeitdaten festlegt.

6. System nach Anspruch 1, **dadurch gekennzeichnet, daß** genanntes Rechenmittel ein Synthetisiermittel (14) ist, das die Information von genanntem Eingabemittel (13) und die Information von genanntem Zeitsteuermittel synthetisch kombiniert.

7. System nach Anspruch 6, **dadurch gekennzeichnet, daß** genanntes Synthetisiermittel (14) eine Synthese durch Berechnung von Zufallszahlen oder mathematische Logik bewirkt.

8. System nach Anspruch 5, **dadurch gekennzeichnet, daß** die Information von genanntem Zeitsteuermittel die Information ist, die aus genannten Zeitdaten durch Berechnung von Zufallszahlen oder mathematische Logik umgewandelt ist.

9. System nach Anspruch 1, ferner umfassend ein Übertragungsmittel zum Übertragen des Programms oder der Daten, das/die von genanntem Ausführ- oder Verarbeitungsmittel wahlweise ausgeführt worden ist oder verarbeitet worden sind, zu einem zweiten Speichermittel.

10. System nach Anspruch 1 und 5, **dadurch gekennzeichnet, daß** genannte zu vergleichende Daten auf der Grundlage von genannten Zeitdaten von genanntem Zeitsteuermittel erzeugt werden und in einem Datenformat vorliegen, das für einen Vergleich mit der Information von genanntem Zeitsteuermittel geeignet ist.

## Revendications

1. Système d'exécution de programmes ou de traitement de données dans un temps choisi, comprenant : un moyen de stockage (1, 11) pour stocker au moins un programme ou article de données ; un moyen de temps pour générer une information spécifiée en fonction du temps ; un moyen d'entrée (3, 13) connecté à un moyen de calcul ; ledit moyen de calcul pour réaliser un calcul spécifié sur la base de l'information obtenue soit depuis à la fois ledit moyen de temps et ledit moyen d'entrée (3, 13) soit depuis seulement ledit moyen de temps en cas d'absence d'information provenant dudit moyen d'entrée (3, 13) ; et un moyen d'exécution ou de traitement pour exécuter ledit programme/traitement desdites données stockées dans ledit moyen de stockage (1, 11) sur la base de la sortie depuis ledit moyen de calcul seulement pendant une période de temps désignée, **caractérisé en ce que** ledit moyen d'exécution ou de traitement comprend un traitement au moyen duquel les données spécifiées à fusionner et à associer avec l'information provenant dudit moyen de temps sont fusionnées avec l'information provenant dudit moyen de calcul et dudit moyen d'exécution ou de traitement exécute sélectivement le programme/traitements des données stockées dans ledit moyen de stockage sur la base du résultat du traitement de fusionnement.

2. Système selon la revendication 1, dans lequel ledit moyen de stockage (1, 11) est un moyen de stockage tel qu'une cartouche, une disquette, un disque compact effaçable et réenregistrable ou similaire que l'on peut attacher ou retirer de l'équipement électronique.

3. Système selon la revendication 1, dans lequel ledit moyen de stockage (1, 11) est un moyen de stockage externe tel qu'un serveur de mémoire externe qui est connecté à travers un moyen de communication.

4. Système selon la revendication 1, dans lequel ledit moyen d'entrée (3, 13) est un moyen d'entrée à travers lequel on peut entrer une information d'entrée telles qu'une information d'entrée de caractères ou de symboles écrits à la main, une information de signaux électriques ou optiques.

5. Système selon la revendication 1, dans lequel mesure de temps signifie une durée de temps telle que années, mois, jours, heures, minutes, ou secondes comme données de temps.

6. Système selon la revendication 1, dans lequel ledit moyen de calcul est un moyen est un moyen de synthèse (14) qui combine de façon synthétique l'information provenant dudit moyen d'entrée (13) et l'information provenant dudit moyen de temps.

7. Système selon la revendication 6, dans lequel ledit moyen de synthèse (14) effectue une synthèse à travers un calcul au moyen de nombres aléatoires ou d'une logique mathématique.

8. Système selon la revendication 5, dans lequel l'information provenant dudit moyen de temps est l'information convertie depuis ladite données de temps à travers un calcul au moyen de nombres aléatoires ou d'une logique mathématique.

9. Système selon la revendication 1, comprenant en outre un moyen de transfert du programme ou des données qui ont été exécutées ou traitées de façon sélective au moyen dudit moyen d'exécution ou de traitement vers un deuxième moyen de stockage.

10. Système selon les revendications 1 et 5, dans lequel lesdites données à fusionner sont générées sur la base de ladite donnée de temps à partir dudit moyen de temps et est un format de donnée capable de comparaison avec l'information provenant dudit moyen de temps.
